# EUROPEAN PATENT APPLICATION

(11) **EP 4 549 257 A1**
(43) Date of publication of application: **07.05.2025**
(21) Application number: 23852351.8
(22) Date of filing: 24.07.2023
(51) Int. Cl.: B60R 21/207, B60R 21/2338

(54) **SIDE AIRBAG DEVICE**

(30) Priority: 10.08.2022 JP 2022128094
(71) Applicant: Autoliv Development AB, 44783 Vargarda (SE)
(72) Inventor: KOBAYASHI, Yuto, Yokohama-shi, Kanagawa 222-8580 (JP); NOGAMI, Mitsuo, Yokohama-shi, Kanagawa 222-8580 (JP); SAKURAI, Tsutomu, Yokohama-shi, Kanagawa 222-8580 (JP)
(74) Representative: Müller Verweyen
(86) International application number: PCT/JP2023/026996
(87) International publication number: WO 2024/034375

(57) **Abstract**

[Problem]

Providing a side airbag device capable of improving the occupant protection performance.

RESOLUTION MEANS

The side airbag device 100 includes a bag-shaped airbag cushion 118 that is provided on the side part of a seat back 106 of a seat 104 and that is expanded and deployed using gas supplied from an inflator 120. The airbag cushion 118 has a main chamber 124B that expands and deploys at the side part of the seat back 112, and a first sub-chamber 126B that expands and deploys protruding from the main chamber 124B toward the seat back 112. The main chamber 124B includes a raised part 166 that rises above the first sub-chamber 126B. The airbag cushion 118 further includes a non-expandable first sail panel 128B that is stretched over an interior angle 174 between the raised part 166 and the first sub-chamber 126B.

## Description

### TECHNICAL FIELD

The present invention is related to a side airbag device provided with a bag-shaped airbag cushion that expands and deploys to a side of the occupant in a vehicle seat in the event of a vehicle side impact or the like.

### BACKGROUND ART

Airbag devices have generally become standard equipment in vehicles in recent years. An airbag device is a safety device that is operated in the event of an emergency such as a vehicle collision to receive and protect an occupant by inflating and deploying an airbag cushion with gas pressure. As an example, a side airbag device is provided with a bag-shaped airbag cushion that expands and deploys to a side of the occupant in a vehicle seat in the event of a vehicle side impact or the like.

Normally, when a vehicle receives an impact in a lateral direction, the occupant moves in a vehicle width direction. For example, in the event of a side impact in which an object such as another vehicle, a utility pole, or the like (impact object) impacts a front passenger seat side door, there are two main types of side airbags that protect an occupant. The first is a so-called near side airbag. The near side airbag expands and deploys between the occupant seat and the side door and prevents an occupant on an impact object contact side (occupant on near side; occupant in occupant seat in this case) from impacting with the side door. The second is the so-called far side airbag (for example Patent Document 1). The far side airbag expands and deploys between the driver seat and the occupant seat and protects an occupant moving to the center of the vehicle due to impact from the lateral direction (far side occupant; occupant in driver seat in this case).

Patent Document 1 describes a vehicle safety device with a far side airbag and a tension tether connected to the far side airbag. The tension tether is connected to the seat back frame at both end parts in the longitudinal direction, and in the expanded and deployed state of the far side airbag, extends upward from the portion of the upper end part of the seat back frame closer to the outside of the vehicle than the headrest and further hooks onto the headrest from the rear side of the seat. Furthermore, the tension tether extends from the upper surface of the headrest to the upper surface of the far side airbag and then through the vehicle inner side of the far side airbag to the seatback frame.

According to Patent Document 1, the tension tether supports the far side airbag from the inner side in the vehicle width direction, and the tension tether can prevent contact between the occupant and the tension tether when the far side airbag expands and deploys, thereby stabilizing the direction of deployment of the far side airbag.

### RELATED ART DOCUMENTS

### Patent Documents

Patent Document 1: Japanese Unexamined Patent Application 2014-51138

### SUMMARY OF THE INVENTION

### PROBLEM TO BE SOLVED BY THE INVENTION

In the vehicle safety device of Patent Document 1, the tension tether must support the far side airbag from the inner side in the vehicle width direction; furthermore, the tension tether must prevent contact between the occupant and the tension tether when the far side airbag expands and deploys. This restricts the mounting position of the tension tether and makes the installation work time-consuming. If the tension tether is displaced from the prescribed position thereof during the deployment of the far side airbag, stabilizing the direction of deployment of the far side airbag will be difficult.

In view of these problems, the object of the present invention is to provide a side airbag device that can improve the protection performance of the occupant.

### MEANS FOR SOLVING THE PROBLEM

In order to resolve the problems described above, a typical configuration of the side airbag device according to the present invention is a side airbag device having a prescribed inflator and a bag shaped airbag cushion provided in a side part of a seat back of a vehicle seat that expands and deploys using gas supplied from the inflator, wherein
the airbag cushion includes:
a main chamber that expands and deploys at the side part of the seat back; and a first sub-chamber that expands and deploys, protruding from the main chamber towards the seat back,
the main chamber includes a raised part that, when expanded and deployed, rises above the first sub-chamber, and
the airbag cushion further includes a non-expandable first sail panel stretched over an interior angle of the raised part and the first sub-chamber.

According to the configuration described above, in the event of a collision, not only can the main chamber and the first sub-chamber restrain the occupant from the side, but the head part of the occupant can be restrained early on by the first sail panel. In particular, the first sail panel can prevent the head part of the occupant from rotating so as to fall sideways, thereby reducing the strain on the head part and reducing the injury level of the occupant. Therefore, according to the configuration described above, it is possible to provide a side airbag device with improved protection performance for the occupant.

The first sail panel is provided to connect the upper end part of the raised part and the tip end part of the first sub-chamber.

According to the configuration described above, the first sail panel can be suitably deployed between the raised part and the first sub-chamber.

The airbag cushion may be arranged such that the raised part is positioned to the side of a head part of an occupant sitting in the vehicle seat and the first sail panel is stretched to the side of the head part of the occupant when the main chamber and the first sub-chamber are expanded and deployed.

According to the configuration described above, the head part of the occupant can be suitably restrained using the first sail panel.

The airbag cushion may further include a second sub-chamber that expands and deploys from a main chamber in a direction opposite that of the first sub-chamber and a non-expandable second sail panel that stretches over an interior angle of the raised part and the second sail panel.

According to the configuration described above, by stretching from the left and right sides to the raised part by the first sail panel and the second sail panel, the shape of the raised part is maintained and the first sail panel is kept in a taut state, enabling the raised part and the first sail panel to suitably restrain the head part and the like of the occupant.

The second sail panel is provided to connect the upper end part of the raised part and the tip end part of the second sub-chamber.

According to the configuration described above, the second sail panel can be suitably deployed between the raised part and the second sub-chamber.

The raised part of the main chamber may be expanded and deployed in a state protruding forward compared to a portion of the main chamber below the raised part of the main chamber.

According to the configuration described above, the raised part and the first sail panel connected to the raised part can widely and suitably restrain the head part and the like of the occupant.

### EFFECT OF THE INVENTION

According to the present invention, it is possible to provide a side airbag device that can improve the protection performance of the occupant

### BRIEF DESCRIPTION OF THE DRAWINGS

FIG. 1 is a diagram depicting an outline of a side airbag device according to an embodiment of the present invention;
FIG. 2 is a diagram depicting the airbag cushion of FIG. 1 as viewed from various directions;
FIG. 3 is a front view depicting the relationship between the airbag cushion and each seat in FIG. 1;
FIG. 4 is a diagram illustrating a Modified Example of the airbag cushion in FIG. 2.
FIG. 5 is a diagram depicting another Modified Example of the airbag cushion of FIG. 2.

### DESCRIPTION OF THE PREFERRED EMBODIMENTS

Preferred embodiments according to the present invention will hereinafter be described in detail with reference to the attached drawings. Dimensions, materials, other specific numerical values, and the like indicated in the embodiments are merely examples for ease of understanding of the invention and do not limit the present invention unless otherwise noted. Note that in the present specification and drawings, elements having essentially identical functions and configurations are labeled with identical symbols in order to omit redundant descriptions, and illustrations of elements not directly related to the present invention are omitted.

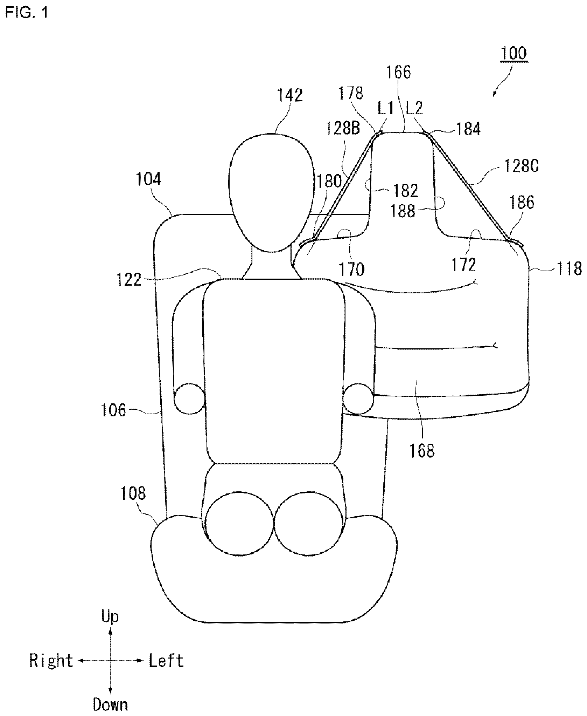

FIG. 1 is a diagram depicting an outline of a side airbag device 100 according to an embodiment of the present invention. An occupant 122 in FIG. 1 is assumed to be seated in a vehicle seat 104 in a normal position. The seat 104 is intended to be a right front seat (for example, a driver's seat) in a vehicle, and has a seat back 106 and a seat cushion 108 on which an occupant 122 sits.

Note that regarding the present Embodiment, when an occupant 122 is seated in a seat 104 in a regular posture, the direction the occupant 122 faces is referred to as front, and the opposite direction is referred to as back. Furthermore, when the occupant 122 is seated in the seat 104 in a regular posture, the right of the occupant 122 is referred to as the right direction, and the left of the occupant 122 is referred to as the left direction. Furthermore, when the occupant 122 is seated in a regular posture, the direction towards the head part of the occupant 122 is referred to as up, and the direction towards the legs of the occupant 122 is referred to as down. Furthermore, as needed, any drawings used in descriptions below will indicate the front, back, left, right, up, and down directions based on the occupant as described above as Front, Back, Left, Right, Up, and Down.

Generally, a seat in a vehicle may be capable of rotating in any direction. Therefore, the directions relative to the occupant seated in the seat 104 may differ from the directions relative to the vehicle. In the present Embodiment, the directions of "up", "down", and "up and down" of the vehicle refer to directions on a line connecting the center of the vehicle's ceiling and the center of the floor, with the direction toward the ceiling referred to as "up" and the direction toward the floor referred to as "down". With regard to the "front", "back", and "front-to-back" directions of a vehicle, the forward moving direction of the vehicle is defined as the "front" direction, and the backward moving direction of the vehicle is defined as the "back" direction. Furthermore, the width direction of the vehicle is the direction in which normal seats are arranged side by side, and refers to the direction perpendicular to the above-mentioned "front-to-back" direction.

In the present Embodiment, the seat opposite the driver seat indicates the passenger seat. The seat opposite to the passenger seat indicates the driver seat. In other words, when describing a seat and a seat opposite to that seat, if the seat is a driver seat, the opposite seat is a passenger seat. On the other hand, when the seat is the passenger seat, the opposite seat is the driver seat.

The occupant 122 in FIG. 1 is an example of a dummy used in automobile crash testing. Dummies that can be used for the occupant 122 include, for example, Hybrid III AM50 and AF05 dummies for frontal collisions. The AM50 is a dummy modeled after a male with a height of 175 cm and a weight of 78 kg, and whose physical build corresponds to the 50th percentile of American adult male. The AF05 is a dummy that is modeled after a small female with a height of 145 cm, a seated height of 79 cm, and a weight of approximately 45 kg.

In addition to the above-mentioned frontal collision dummy, the occupant 122 may be a side collision dummy, a child dummy, or even a rear collision dummy, as appropriate. These dummies are based on US National Highway Traffic Safety Administration (NHTSA) standards.

The side airbag device 100 illustrated in FIG. 1 can be built into each side of a seat back 106 of a seat 104. As an example, the side airbag device 110 of the present Embodiment is assumed to be installed in the seat 104 on the vehicle center side.

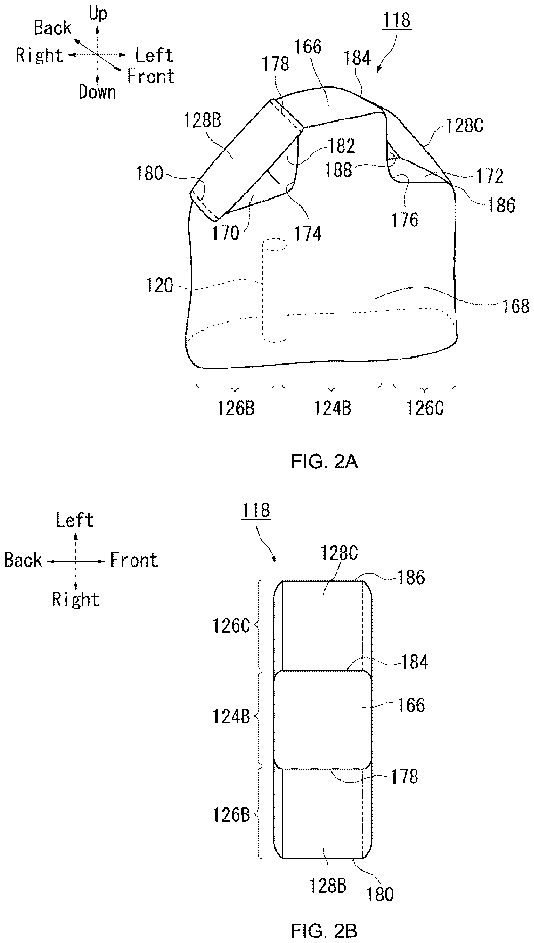

The side airbag device 100 is designed so that a bag-shaped airbag cushion 118 expands and deploys from the seat 104 toward the side of an occupant 122. The airbag cushion 118 utilizes gas supplied from an inflator 120 (see FIG. 2(a)), which is a gas generating device, to cleave the cover of the seat back 106 and expand and deploy to the side of the occupant 122.

FIG. 2 is a diagram depicting the airbag cushion 118 of FIG. 1 as viewed from various directions. FIG. 2(a) is a perspective view of the airbag cushion 118 in FIG. 1.

The airbag cushion 118 is formed into a bag shape, for example, by sewing the base fabric constituting the cushion surface on the front and back sides or by weaving the fabric using OPW (One-Piece Woven).

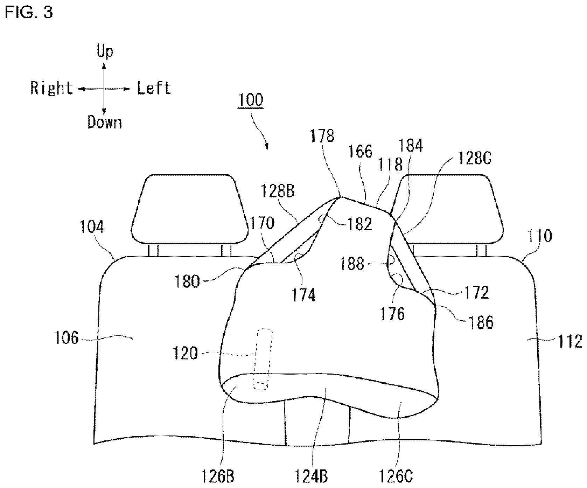

The respective portions of the expandable part of the airbag cushion 118 are roughly divided into a central main chamber 124B, a first sub-chamber 126B on the occupant side, and a second sub-chamber 126C on the opposite side. When the airbag cushion 118 is expanded and deployed, the airbag cushion 118 deploys so that a first sub-chamber 126B, a main chamber 124B, and a second sub-chamber 126C are arranged in this order along the left-to-right direction of the seat 104 as viewed from the seat 104 (see FIG. 3).

The main chamber 124B includes a base part 168 and a raised part 166, and is expanded and deployed to the side of the occupant 122 seated in the seat 104 (see FIG. 1). The base part 168 is a portion that defines the central extent of the main chamber 124B. The raised part 166 expands and deploys so as to rise above the first sub-chamber 126B and the second sub-chamber 126C.

The first sub-chamber 126B expands and deploys so as to protrude from the base part 168 of the main chamber 124B toward the seat back 106 side where the occupant 122 (see FIG. 1) is present. The upper surface of the first sub-chamber 126B forms a support part 170 that is capable of receiving a head part 142 of the occupant 122 when the head part enters therein.

The second sub-chamber 126C expands and deploys so as to protrude from the base part 168 of the main chamber 124B in the direction opposite to that of the first sub-chamber 126B. The upper surface of the second sub-chamber 126C forms a support part 172, which protrudes toward another seat 110 (see FIG. 3) described below, and is capable of receiving the head part of an occupant in the seat 110 when the head part enters therein.

**The** airbag cushion 118 includes a first sail panel 128B and a second sail panel 128C as non-expandable portions that are tensioned like a sail.

When the airbag cushion 118 is expanded and deployed, the first sail panel 128B is connected to a right side edge 178 extending along the front-to-back direction of the upper surface of the raised part 166 and to a right side edge 180 extending along the front-to-back direction of the support part 170, which is the upper surface portion of the first sub-chamber 126B. As a result, the airbag cushion 118 is in a state where the edges of the raised part 166 and the first sub-chamber 126B are connected by the first sail panel 126B.

The first sail panel 128B is stretched across the interior angle 174 between the raised part 166 and the first sub-chamber 126B, in other words, the corner formed by a right side surface 182 extending in the vertical direction on the right side in the left-to-right direction of the raised part 166, and the upper surface (support part 170) extending in the left-to-right direction of the first sub-chamber 126B. The first sail panel 128B is tensioned between the raised part 166 and the first sub-chamber 126B as the raised part 166 and the first sub-chamber 126B expand and deploy.

As depicted in FIG. 1, when the first sail panel 128B is deployed, a straight line L1 connecting the right side edge 178 of the raised part 166 and the right side edge 180 of the first sub-chamber 126B is continuously connected in the front-to-back direction so as to oppose the head part 142 of the occupant 122 (see FIG. 1) from the side. This surface is an inclined surface that slopes downward from the upper part of the raised part 166 toward the occupant side portion of the first sub-chamber 126B. By forming this inclined surface, the first sail panel 128B is able to efficiently receive the head part 142 of the occupant 122 in the seat 104.

When the airbag cushion 118 is expanded and deployed, the second sail panel 128C is connected to a left side edge 184 extending along the front-to-back direction of the upper surface of the raised part 166 and to a left side edge 186 extending along the front-to-back direction of the support part 172, which is the upper surface portion of the second sub-chamber 126C. As a result, the airbag cushion 118 is in a state where the edges of the raised part 166 and the second sub-chamber 126C are connected by the second sail panel 126C.

The second sail panel 12C is stretched across the interior angle 176 between the raised part 166 and the second sub-chamber 126C, in other words, the corner formed by a left side surface 188 extending in the vertical direction on the left side in the left-to-right direction of the raised part 166, and the upper surface (support part 172) extending in the left-to-right direction of the second sub-chamber 126C. The second sail panel 128C is also stretched between the raised part 166 and the second sub-chamber 126C as the raised part 166 and the second sub-chamber 126C expand and deploy.

The deployed second sail panel 128C forms a surface (which may include a flat or curved surface) that extends and is connected continuously in the front-to-back direction, with a straight line L2 (see FIG. 1) connecting the left side edge 184 of the raised part 166 and the left side edge 186 of the second sub-chamber 126C so as to oppose the side of the head part of an occupant seated in the seat 110 (see FIG. 3). This surface is an inclined surface that slopes downward from the upper part of the raised part 166 toward the portion of the second sub-chamber 126C on the occupant side of the seat 110. By forming this inclined surface, the second sail panel 128C is able to efficiently receive the head part of the occupant in the seat 110.

FIG. 2(b) is a diagram depicting the airbag cushion 118 in FIG. 1, as viewed from above. The first sail panel 128B and the second sail panel 128C can pull the raised part 166 from both sides in the width direction of the seat 104 (see FIG. 1) and support the orientation of the raised part 166. This enables the raised part 166 to maintain a raised shape even when a load is applied from the head part 142 or the like of the occupant 122, and allows the head part 142 or the like to be appropriately restrained.

As depicted in FIG. 1, the airbag cushion 118 is positioned so that the raised part 166 is arranged to the side of the head part 142 of the occupant 122 in the seat 104. The first sail panel 128B is configured to be in a taut state on the side of the head part 142 of the occupant 122 when the raised part 166 of the main chamber 124B and the first sub-chamber 126B are expanded and deployed.

The first sail panel 128B is provided to connect the upper end part of the raised part 166 and the tip end part of the first sub-chamber 126B that protrudes toward the seat back 112 side. The first sail panel 128B is then stretched and unfolded between the raised part 166 and the support part 170 and placed in tension to form a non-expandable surface between the raised part 166 and the support part 170. As a result, when the head part 142 of the occupant 122 falls to the side, the airbag cushion 118 is able to receive the head part 142 of the occupant 122 by the reaction force of the taut first sail panel 128B.

According to the configuration described above, in the event of a collision, not only can the main chamber 124B and the first sub-chamber 126B restrain the occupant 122 from the side, but the head part 142 of the occupant 122 can be restrained early on by the first sail panel 128B. In particular, the first sail panel 128B can prevent the head part 142 of the occupant 122 from rotating so as to fall sideways, thereby reducing the strain on the head part 142 and reducing the injury level of the occupant 122. Therefore, according to the configuration described above, it is possible to provide a side airbag device 100 with improved protection performance for the occupant 122.

FIG. 3 is a front view depicting the relationship between the airbag cushion 118 and each seat in FIG. 1.

Another seat 110 is arranged adjacent to the seat 104 in the vehicle. The seat 110 is, for example, a passenger seat on the left front side of the vehicle, and has a seat back 112 and a seat cushion (not shown). The side airbag device 100 can be built into the side of the seat back of each seat, not only in the side portion on the vehicle center side, but also in the side portion on the door side.

The second sail panel 128C is provided to connect the upper end part of the raised part 166 and the tip end part of the second sub-chamber 126C that protrudes on the opposite side to the first sub-chamber 126B. The second sail panel 128C is then stretched and unfolded between the raised part 166 and the support part 172 and placed in tension to form a non-expandable surface between the raised part 166 and the support part 172. As a result, even if the head part of an occupant in another seat 110 falls sideways, the airbag cushion 118 is able to receive the head part of the occupant by the reaction force of the taut second sail panel 128C.

By applying tension from the left and right sides to the raised part 166 using the first sail panel 128B and the second sail panel 128C, the shape of the raised part 166 can be maintained and the first sail panel 128B and the second sail panel 128C can be held in a taut state. Therefore, with the airbag cushion 118, it is possible to preferably restrain the head parts and the like of the occupants in the seats 104, 110 by utilizing the raised part 166, the first sail panel 128B and the second sail panel 128C.

It is known that in a vehicle emergency, the angular velocity and angular acceleration of the head part of an occupant are likely to increase the injury values associated with the brain. In this regard, in the airbag cushion 118 of the present Embodiment, the first sail panel 128B and the second sail panel 128C are stretched on both sides of the raised part 166, so that the head part of the occupant can be restrained by the first sail panel 128B and the second sail panel 128C earlier than in a case where only an expandable part such as the raised part 166 is provided. Therefore, the airbag cushion 118 can suppress the lateral rotation of the head part of the occupant, thereby enabling appropriate reduction of the injury level of the occupant.

As described above, by utilizing the first sail panel 128B and the second sail panel 128C, the airbag cushion 118 can improve the occupant protection performance without making significant design changes to the shape, or the like, from a conventional airbag cushion. The airbag cushion 118 achieves earlier head part restraint while still satisfying the restraint performance and packaging performance of conventional airbag cushion, thereby contributing to further improvement of occupant restraint performance.

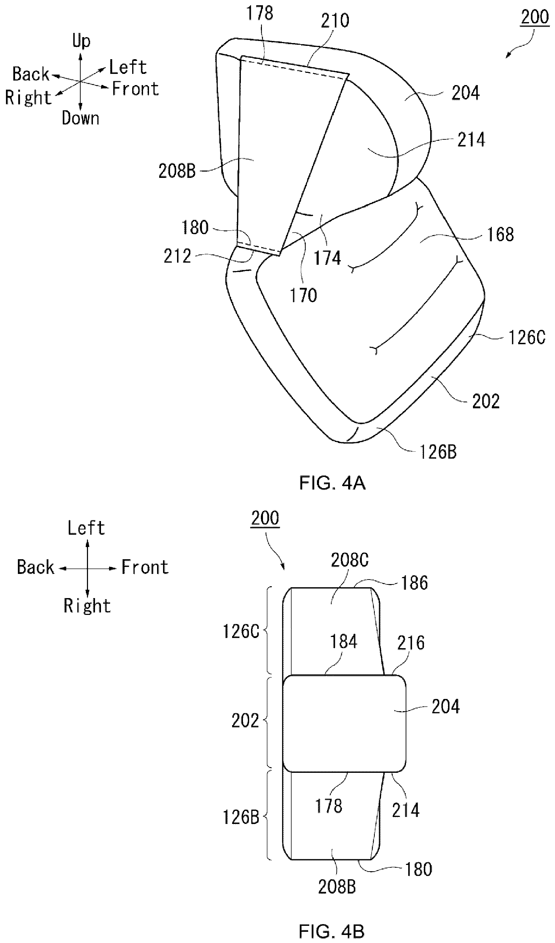

FIG. 4 is a diagram depicting a modified example of the airbag cushion 118 in FIG. 2 (airbag cushion 200). In the description below, the same code will be provided for configuration elements that have already been described and the description thereof is omitted. In addition, configuration elements with the same name as configuration elements already described have the same configuration and function even if a different reference is applied.

FIG. 4(a) is a perspective view of the airbag cushion 200. A main chamber 202 of the airbag cushion 200 has a raised part 204 that protrudes forward relative to the lower base part 168.

The airbag cushion 200 expands and deploys such that the base part 168 of the main chamber 202, the first sub-chamber 126B and the second sub-chamber 126C are angled along the seat back 106 (see FIG. 3). The raised part 204 then expands and deploys at an angle rising upward from the base part 168.

The raised part 204 expands and deploys so that the front side curves and protrudes forward. A first sail panel 208B has a first side 210 connected to the raised part 204 that is longer than the other side 212 connected to the support part 170, and has a shape that resembles an inverted trapezoid. A second sail panel 208C (see FIG. 4(b)) on the opposite side has the same configuration.

FIG. 4(b) is a diagram depicting the airbag cushion 200 in FIG. 4(a), as viewed from above. As described above, when the airbag cushion 200 is expanded and deployed, the raised part 204 of the main chamber 202 is raised upward and forward compared to the lower base part 168 (see FIG. 4A) and the expandable parts of the first sub-chamber 126B, or the like.

The raised part 204 protrudes forward, thereby increasing the length thereof in the front-to-back direction, where the long front-to-back side surfaces 214, 216 can be used to fully restrain the head part of an occupant in the seats 104, 110 (see FIG. 3). The first sail panel 208B and the second sail panel 208C also have an inverted trapezoidal shape with a larger upper area, enabling them to fully receive the head parts of occupants in the seats 104, 110.

As described above, the airbag cushion 200 also makes it possible to widely and suitably restrain the head part and other parts of the occupant in the seats 104, 110 by means of the raised part 204, the first sail panel 208B and the second sail panel 208C.

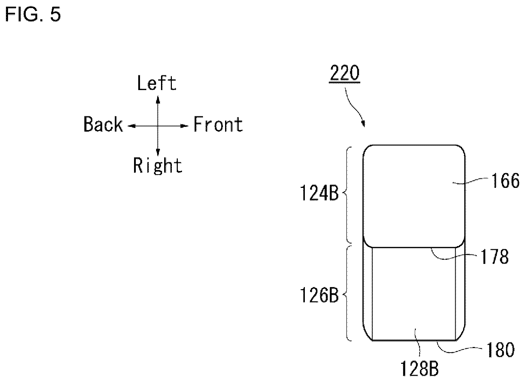

FIG. 5 is a diagram depicting another modified example of the airbag cushion 118 in FIG. 2(b) (airbag cushion 220). The airbag cushion 220 of FIG. 5 is composed of a main chamber 124B, a first sub-chamber 126B, and a first sail panel 128B, with the second sub-chamber 126C and second sail panel 128C of FIG. 2(b) being omitted.

The airbag cushion 220 also enables the first sail panel 128B to appropriately receive the head part 142 of the occupant 122 (see FIG. 1), enabling restraint of and minimizing the injury level of the occupant 122. In particular, when the head part 142 enters the first sail panel 128B, the raised part 166 pulled by the first sail panel 128B tilts toward the head part 142 to receive the head part 142, and therefore the airbag cushion 220 is also able to achieve early restraint of the head part 142.

In the embodiment illustrated in FIG. 2 and FIG. 4, the first sail panel and the second sail panel are arranged symmetrically side to side, but they may also be arranged asymmetrically side to side. For example, the first sail panel 128B in FIG. 2(a) could be connected to the raised part 166 at a higher position than the second sail panel 128C, or the second sail panel 128C could be connected to the support part 172 at a location separated from the raised part 166 so as to reduce the angle of inclination compared to the first sail panel 128B.

Preferred embodiments of the present invention were described with reference to the appended drawings, but it goes without saying that the present invention is not limited to such examples. It is clear that a person of ordinary skill in the art could conceive various modifications or revisions within the scope set forth by the claims, and it would be understood that these modifications or revisions would belong to the technical scope of the present invention.

Moreover, the example in which the side airbag device 100 according to the present invention is applied to automobiles has been described in the abovementioned embodiments. However, in addition to automobiles, the present invention can be applied to aircrafts, ships, and the like, with the same operations and effects capable of being exerted.

### INDUSTRIAL APPLICABILITY

The present invention can be applied to a side airbag device provided with a bag-shaped cushion that expands and deploys to a side of the occupant in a vehicle seat in the event of a vehicle side impact or the like.

### EXPLANATION OF CODES

100. Side airbag device, 102. Vehicle, 104. Seat, 106. Seatback, 108. Seat cushion, 110. Seat, 112. Seatback, 114. Seat cushion, 118. Airbag cushion, 120. Inflator, 122. Occupant, 124B. Main chamber, 126B. First sub-chamber, 126C. Second sub-chamber, 128B. First sail panel, 128C. Second sail panel, 142. Head part, 166. Raised part, 168. Base part, 170. Support part, 172. Support part, 174. Interior angle, 176. Interior angle, 178. Right side edge, 180. Right side edge, 182. Right side surface, 184. Left side edge, 186. Left side edge, 188. Left side surface, L1. Straight line, L2. Straight line, 200. Airbag cushion, 202. Main chamber, 204. Raised part, 208B. First sail panel, 208C. Second sail panel, 210. First side, 212. Second side, 214. Side surface, 220. Airbag cushion,

## Claims

1. A side airbag device having a prescribed inflator and a bag shaped airbag cushion provided in a side part of a seat back of a vehicle seat that expands and deploys using gas supplied from the inflator, wherein
the airbag cushion includes:
a main chamber that expands and deploys at the side part of the seat back; and
a first sub-chamber that expands and deploys, protruding from the main chamber towards the seat back,
the main chamber includes a raised part that, when expanded and deployed, rises above the first sub-chamber, and
the airbag cushion further includes a non-expandable first sail panel stretched over an interior angle of the raised part and the first sub-chamber.

2. The side airbag device according to claim 1, wherein the first sail panel is provided so as to connect the upper end part of the raised part and the protruding tip end part of the first sub-chamber.

3. The side airbag device according to claim 1 or 2, wherein the airbag cushion is arranged such that the raised part is positioned to the side of a head part of an occupant sitting in the vehicle seat and the first sail panel is stretched to the side of the head part of the occupant when the main chamber and the first sub-chamber are expanded and deployed.

4. The side airbag device according to claim 1 or 2, wherein the airbag cushion further includes a second sub-chamber that expands and deploys from a main chamber in a direction opposite that of the first sub-chamber and a non-expandable second sail panel that stretches over an interior angle of the raised part and the second sail panel.

5. The side airbag device according to claim 4, wherein the second sail panel is provided so as to connect the upper end part of the raised part and the protruding tip end part of the second sub-chamber.

6. The side airbag device according to any one of claims 1, 2, 4, or 5, wherein the raised part of the main chamber expands and deploys protruding further forward than a portion of the main chamber that is lower than the raised part.
